(19) Europäisches Patentamt
European Patent Office
Office européen des brevets

(11) Veröffentlichungsnummer: **0 474 130 B1**

(12) **EUROPÄISCHE PATENTSCHRIFT**

(45) Veröffentlichungstag der Patentschrift: **30.11.94**

(51) Int. Cl.5: **B62D 7/15**, B62D 6/04, G05D 1/08

(21) Anmeldenummer: **91114606.6**

(22) Anmeldetag: **30.08.91**

(54) **Verfahren zum Lenken eines Strassenfahrzeugs mit Vorder- und Hinterradlenkung.**

(30) Priorität: **06.09.90 DE 4028320**

(43) Veröffentlichungstag der Anmeldung:
**11.03.92 Patentblatt 92/11**

(45) Bekanntmachung des Hinweises auf die Patenterteilung:
**30.11.94 Patentblatt 94/48**

(84) Benannte Vertragsstaaten:
**FR GB IT SE**

(56) Entgegenhaltungen:
**EP-A- 0 150 857
EP-A- 0 309 293
FR-A- 2 636 288**

**PROCEEDINGS OF THE 29TH IEEE CONFERENCE ON DECISION AND CONTROL DECEMBER 5-7,1990, HILTON HAWAIIAN VILLAGE, HONOLULU, HAWAII Bd. 4, IEEE CONTROL SYSTEMS SOCIETY, Seiten 2033-2034; ACKERMANNN: "ROBUST CAR STEERING BY YAW RATE CONTROL"**

(73) Patentinhaber: **Deutsche Forschungsanstalt für Luft- und Raumfahrt e.V.
Linder Höhe
Postfach 90 60 58
D-51126 Köln (DE)**

(72) Erfinder: **Ackermann, Jürgen, Prof. Dr.
M.-Rouff-Strasse 14c
W-8036 Herrsching (DE)**

(74) Vertreter: **von Kirschbaum, Albrecht, Dipl.-Ing.
Patentanwalt,
Postfach 15 20
D-82102 Germering (DE)**

**Beschreibung**

Die Erfindung betrifft ein Verfahren zum Lenken eines Straßenfahrzeugs mit Vorder- und Hinterradlenkung.

Bei der Lenkung von Straßenfahrzeugen, wie PKW, LKW, Bus u.ä., wird derzeit vom Fahrer erwartet, daß er das dynamische Verhalten des Fahrzeugs unter unterschiedlichen Betriebsbedingungen, wie Beladung, Straßenzustand, Fahrgeschwindigkeit usw. beherrscht, und seine Fahrweise darauf einrichtet. Die Einschätzung von Grenzsituationen, wie beispielsweise Glatteis, enge Kurven wird zwar immer in der Verantwortung des Fahrers bleiben; bereits bevor solche Grenzen erreicht werden, gibt es jedoch erhebliche Unterschiede zwischen einem geübten Fahrer und einem Anfänger, sowie zwischen verschiedenen Fahrzeugen.

Bekannt sind die Schwierigkeiten, die sich beim Auftreten unerwarteter Gierbewegungen des Fahrzeugs ergeben können, wie beispielsweise auf regennasser Straße, bei plötzlichen Ausweichmanövern, beim Hineinfahren in einen Seitenwind an einem Waldrand oder hinter eine Brücke, usw. Durch falsche Lenkreaktionen in solchen Situationen können dann die Gierbewegungen sogar noch verstärkt werden.

Viele Verkehrsunfälle sind auf Fehler der Fahrer zurückzuführen und beruhen insbesondere auf Fehleinschätzungen der Fahrzeugdynamik bei verschiedenen Geschwindigkeiten, bei unterschiedlichen Straßenbeschaffenheiten und verschiedenen Beladungen. Die existierenden Fahrzeuglenkungen unterstützen den Fahrer - wenn überhaupt - nur sehr unzureichend.

Bisher wird bei der Lenkung ein konstant eingehaltener Lenkwinkel in eine stationäre Kreisbogenfahrt mit konstantem Radius und zugehöriger Gierwinkelgeschwindigkeit umgesetzt. Welcher stationärer Wert das ist, und wie der Einschwingvorgang verläuft, hängt jedoch von den wechselnden Betriebsbedingungen ab.

Bei heute auf dem Markt angebotenen Fahrzeugen ist die Lenkung häufig servounterstützt; es ist jedoch stets eine mechanische Verbindung vom Lenkrad zu den Vorderrädern vorhanden, d.h. die Lenkradstellung kommandiert mit einer kleinen Verzögerung den Lenkwinkel der Vorderräder.

In Experimentalfahrzeugen und auch in der Literatur, wie beispielsweise in "Mechatronics for cars: integrating machines and electronics to prevent skidding on icy roads", von Y. Hossam El-Deen und Ali Seireg in Computers in Mechanical Engineering, 1987, Stn. 10 bis 22, ist auch bereits die Möglichkeit eines sogenannten "drive-by-wire"-Systems untersucht worden; hierbei wird der Lenkradwinkel, beispielsweise durch einen Potentiometerabgriff, gemessen, welcher dann eine Führungsgröße eines elektrischen Regelkreises mit Sensoren und eines in einem Mikrorechner verwirklichten Regelgesetzes ist, mittels welchem ein elektrischer oder hydraulischer Motor zur Verstellung der Vorderräder angesteuert wird. Der gemessene Lenkwinkel wird mit einem Sollwert, der sogenannten Führungsgröße verglichen.

Obwohl einer Einführung des "drive-by-wire"-Systems in größerem Umfang heute noch Sicherheitsbedenken entgegenstehen, wie sie beispielsweise vor 20 Jahren auch dem entsprechenden "fly-by-wire"-System im Flugzeug entgegengebracht wurden, sprechen für dessen Einführung vor allem die positiven Erfahrungen in der Luftfahrt mit "fly-by-wire"-Systemen, die Einführung des "drive by wire" für die Hinterradlenkung sowie zukünftige Entwicklungsmöglichkeiten, wie beispielsweise eine automatische Spurführung, wie sie in Europa im sogenannten Prometheus-Programm, sowie in den USA und in Japan untersucht werden.

Eine zusätzliche Hinterradlenkung wurde zuerst von japanischen Herstellern eingeführt. Beispielsweise benutzt Honda eine mechanische Verbindung, durch welche die Hinterräder nur abhängig vom Lenkradwinkel gelenkt werden, und zwar gleichsinnig bei kleineren Winkeln bzw. gegensinnig bei größeren Winkeln. Von Mazda ist beispielsweise ein "drive-by-wire"-System für die Hinterräder verwirklicht worden, wobei in Abhängigkeit von der Fahrzeuggeschwindigkeit das Verhältnis der Lenkwinkel vorne und hinten verändert wird. Von Nissan und Mitsubishi wird in deren "drive-by-wire"-System für die Hinterradlenkung zusätzlich noch eine Druckmessung aus der Vorderrad-Servolenkung benutzt.

Bei einem Versuchsfahrzeug von Ford wird die Gierwinkelgeschwindigkeit r mit einem Kreisel gemessen und in das Hinterradlenksystem eingeführt. Dabei wird die Gierwinkelgeschwindigkeit r als zusätzliche Regelgröße betrachtet, d.h. es wird aus Lenkradwinkel und Fahrgeschwindigkeit eine fiktive Gierwinkelgeschwindigkeit $r_{soll}$ berechnet, und die Differenz ($r_{soll}$ - r) wird über einen fahrzeugspezifisch ausgelegten Regler auf die Hinterradlenkung gegeben (siehe B. Los A. Matheis, J.E. Nametz und R.E. Smith, Konstruktion und Entwicklung eines Fahrzeugs mit mikroprozessor-geregelter Allradlenkung, VDI Bericht Nr. 650, Düsseldorf 1987 Stn. 239-257).

Der Gedanke, eine fiktive Gierwinkelgeschwindigkeit $r_{soll}$ zu verwenden, taucht in verschiedenen anderen Veröffentlichungen auf. Hierbei werden jedoch recht widersprüchliche Angaben über die Berechnung bzw. die Bestimmung des Wertes $r_{soll}$ gemacht, welcher jeweils empirisch oder auch theoretisch aus der stationären Kreisfahrt ermittelt wird.

Aufgabe der Erfindung ist es daher, ein Verfahren zum Lenken von Straßenfahrzeugen mit Vorder- und Hinterradlenkung zu schaffen, bei welchem die Auswirkungen von Gierbewegungen auf die seitliche Bewegung der Vorderachse automatisch und vollständig ausgeglichen werden und gleichzeitig Eigenwerte der Gierbewegungen nach Vorgaben festgelegt werden können. Gemäß der Erfindung ist dies bei einem Verfahren zum Lenken von Straßenfahrzeugen mit Vorderrad-und Hinterradlenkung durch die Merkmale im kennzeichnenden Teil des Anspruchs 1 erreicht.

Bei dem erfindungsgemäßen Lenkverfahren für Straßenfahrzeuge mit Vorder- und Hinterradlenkung wird durch den Lenkradwinkel nicht mehr, wie bisher,direkt nur der Lenkwinkel,sondern in vorteilhafter Weise die Gierwinkelgeschwindigkeit kommandiert. Gegenüber anderen Systemen, bei welchen auch ein Kreisel zur Messung der Gierwinkelgeschwindigkeit benutzt wird, entfällt jedoch beim erfindungsgemäßen Lenkverfahren die oft dubiose Abschätzung einer fiktiven Soll-Gierwinkelgeschwindigkeit ($r_{soll}$), welche nach unterschiedlichen Kriterien aus der Fahrgeschwindigkeit und dem Lenkradwinkel hergeleitet wird.

Bei Anwendung des erfindungsgemäßen Lenkverfahrens muß der Fahrer somit nur, wie bisher, die Bahnplanung sowie das Ausgleichen von seitlichen Abweichungen der Vorderachse des Fahrzeugs von der geplanten Bahn übernehmen. Dies wird ihm gemäß der Erfindung dadurch wesentlich erleichtet, daß die von veränderlichen Parametern abhängige Gierbewegung keine Rückwirkung mehr auf die Seitenbewegung der Vorderachse hat. Bei Verwendung des erfindungsgemäßen Lenkverfahrens braucht sich also der Fahrer um die Gierbewegung des Fahrzeugs überhaupt nicht mehr zu kümmern; sie ist stets stabil und kann durch konstruktive Maßnahmen bedämpft werden.

Der besondere Vorteil bei dem erfindungsgemäßen Verfahren besteht darin, daß die erforderliche Regelung nicht mehr fahrzeugspezifisch ausgelegt oder betriebszustandsabhängig verändert werden muß, da es sich um eine einfache, robuste Regelung handelt, bei welcher gemäß der Erfindung die Gierwinkelgeschwindigkeit über die Kreiselrückführung auf ein integrierendes Stellglied gegeben wird.

Ferner können gemäß der Erfindung, da das Fahrzeug über eine zusätzliche Hinterradlenkung verfügt, über diese Hinterradlenkung Eigenwerte der Gierbewegung nach Wunsch festgelegt werden; obendrein können diese Eigenwerte in Anpassung an unterschiedliche Fahrerwünsche, ob beispielsweise mehr eine sportliche oder komfortable Fahrweise bevorzugt wird, sogar umschaltbar ausgelegt werden.

Die Komponenten, welche zum Aufbau eines entsprechend dem erfindungsgemäßen Verfahren ausgelegten Lenksystems erforderlich sind, wie Kreisel, integrierende Motoren oder Stellglieder u.ä. sind handelsüblich und daher vorhanden, da sie bereits im Fahrzeugbau zu anderen Zwecken eingesetzt und verwendet werden, jedoch bisher noch nicht entsprechend dem erfindungsgemäßen Verfahren zu einem Lenksystem zusammengeschaltet worden sind.

Die für eine serienmäßige Verwendung in Straßenfahrzeugen benötigten Kreisel müssen zuverlässig und preiswert sein. Dagegen sind die Anforderungen an deren Meßgenauigkeit und an eine geringe Drift d.h. Anforderungen, welche die Kreisel sonst teuer machen, nur gering. Für eine Verwendung beim erfindungsgemäßen Lenkverfahren kommen beispielsweise in Frage: Vibrationskreisel, wie sie von der Robert Bosch GmbH, Berlin, hergestellt werden und beispielsweise auf dem DGON-Symposium Gyro Technology, 1990 in Stuttgart von Kaiser, Boruschewitz, Hamisch, Gärtner, Pfaff in "Development of a low cost gyro based on an vibrating piezoelectric plate" beschrieben sind, von Britisch Aerospace, Plymouth hergestellte Vibrationskreisel ("Solid state vibrating shell gyro", bzw. Vibrationskreisel, welche von GEC Ferranti, Edinburgh hergestellt werden.

Ebenso sind hydraulische Stellglieder (ohne eine Positionsrückführung) bereits für eine automatische Spurführung eingesetzt worden, wie beispielsweise von W. Darenberg, in "AutomatischeSpurführung von Kraftfahrzeugen", Automobilindustrie 1987 Seiten 155 bis 159 beschrieben worden ist. Durch die Verwendung besserer Magnetstoffe können auch elektrische Stellmotore zur Fahrzeuglenkung eingesetzt werden. Hierbei haben sowohl die hydraulischen Stellglieder als auch die elektrischen Stellmotoren ein integrierendes Verhalten.

Nachfolgend wird die Erfindung anhand einer bevorzugten Ausführungsform unter Bezugnahme auf die anliegenden Zeichnungen im einzelnen erläutert. Es zeigen:

Fig.1  eine schematische Darstellung eines Einspur-Fahrzeugmodells bei Kurvenfahrt;

Fig.2  ein Blockschaltbild, in welchem der Zusammenhang verschiedener Größen einer Zustandsdarstellung sowie Maßnahmen zur Lenkung nur mittels einer Vorderradlenkung veranschaulicht ist;

Fig.3  ein der Fig.2 äquivalentes Blockschaltbild, bei dem zur Herleitung des Regelgesetzes andere Zustandsgrößen verwendet sind;

Fig.4  eine vereinfachte Darstellung des Blockschaltbilds der Fig.3, und

Fig.5  ein Blockschaltbild eines Kompensators für die Polvorgabe einer Gierbewegung.

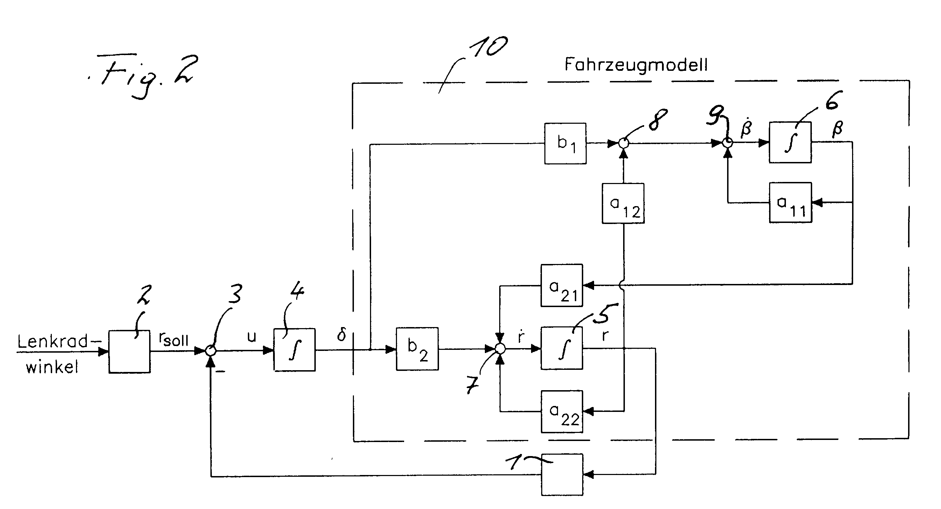

Zuerst wird die der Erfindung zugrundeliegende Theorie behandelt und anschließend anhand von in Fig.2 bis 4 wiedergegebenen Blockschaltbildern illustriert, in welchen der Aufbau eines entsprechend der Erfindung ausgeführten Lenksystems aus handelsüblichen Komponenten wiedergegeben und dessen Wirkungsweise veranschaulicht ist.

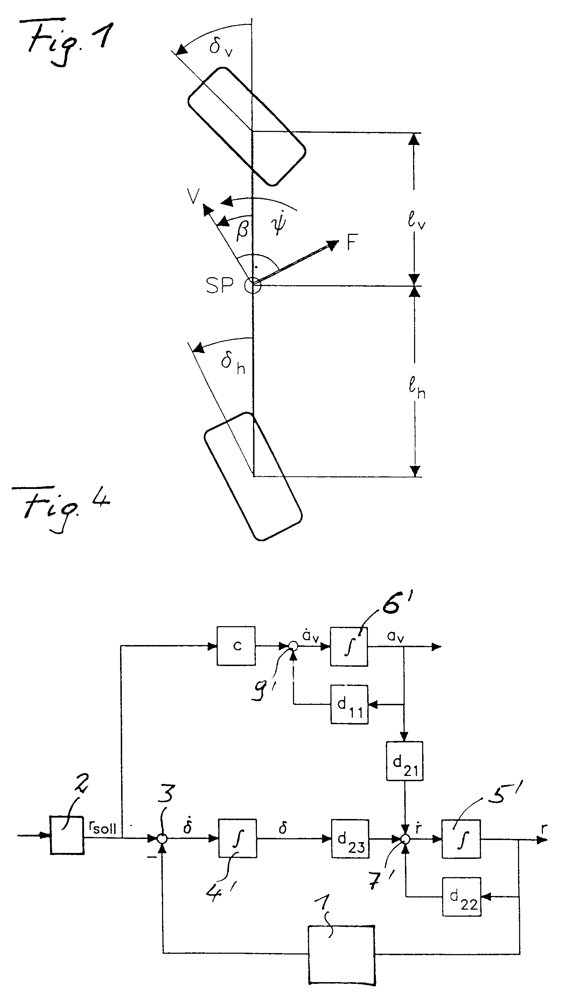

Für die Fahrzeugdynamik bei der Lenkbewegung ist ein linearisiertes, mathematisches Modell zugrundegelegt. Hierbei handelt es sich um ein Einspurmodell, das von P. Riekert und T.E. Schunk in der Veröffentlichung "Zur Fahrzeugmechanik des gummibereiften Kraftfahrzeugs" in Ing. Archiv 1940 abgehandelt ist, wobei die Bewegungen in den Freiheitsgraden Gieren und Schwimmen beschrieben sind. Von A. Zomotor sind in dem im Vogel-Verlag, Würzburg 1987 erschienenen Buch "Fahrwerktechnik" in dem Kapitel "Fahrverhalten" die auch in Fig.1 eingetragenen Größenbezeichnungen, wie folgt, verwendet:

$\ell_v$ = Abstand Schwerpunkt - Vorderachse

$\ell_h$ = Abstand Schwerpunkt - Hinterachse

v = Fahrgeschwindigkeit

$\beta$ = Schwimmwinkel

(zwischen dem v-Vektor und der Fahrzeuglängsachse)

$\dot{\psi}$ = Gierwinkelgeschwindigkeit

(zwischen Fahrzeuglängsachse und einem inertialen Bezugssystem)

$\delta_v$ = Lenkwinkel (vorne)

$\delta_h$ = Lenkwinkel (hinten)

SP = Schwerpunkt

Veränderliche Parameter des Fahrzeugs und der Straßenoberfläche sind:

$C_v, C_h$ = Schräglaufsteifigkeit vorn bzw. hinten

$m_g$ = Fahrzeugmasse

$I_{gz}$ = Fahrzeugträgheitsmoment.

Als Bewegungsgleichungen für das Einspurmodell mit Lenkung nur der Vorderräder, d.h. $\delta_v = \delta$ und $\delta_h \equiv 0$, ergeben sich dann entsprechend Zomotor in dem angegebenen Fachbuch (Ste.101):

$$m_g v \dot{\beta} + \frac{1}{v}(m_g v^2 + C_v \ell_v - C_h \ell_h)\dot{\psi} + (C_v + C_h)\beta - C_v \delta = 0 \qquad (1)$$

$$I_{gz}\ddot{\psi} + \frac{1}{v}(C_v \ell_v^2 + C_h \ell_h^2)\dot{\psi} - (C_h \ell_h - C_v \ell_v)\beta - C_v \ell_v \delta = 0 \qquad (2)$$

$$F_c = m_g v (\dot{\psi} + \dot{\beta}) \qquad (3)$$

Wenn für die Gierwinkelgeschwindigkeit eine Variable r $= \dot{\psi}(= d\psi/dt)$ eingeführt wird, können die Gl.'en (1) und (2) geschrieben werden als:

$$\dot{\beta} = -(m_g v^2 + C_v \ell_v - C_h \ell_h) \cdot r/m_g v^2 - (C_v + C_h)\beta/m_g v + C_v \delta/m_g v \qquad (1')$$

$$\dot{r} = -(C_v \ell_v^2 + C_h \ell_h^2)r/I_{gz}v - (C_v \ell_v - C_h \ell_h)\beta/I_{gz} + C_v \ell_v \delta/I_{gz} \qquad (2')$$

oder in Matrix-Schreibweise als Zustandsmodell

$$\begin{bmatrix} \dot{\beta} \\ \dot{r} \end{bmatrix} = \begin{bmatrix} a_{11} & a_{12} \\ a_{21} & a_{22} \end{bmatrix} \begin{bmatrix} \beta \\ r \end{bmatrix} + \begin{bmatrix} b_1 \\ b_2 \end{bmatrix} \cdot \delta \qquad (4)$$

mit den Koeffizienten

$a_{11} = -(C_v + C_h)/m_g v$

$a_{12} = -1-(C_v \ell_v - C_h \ell_h)/m_g v^2$

$a_{21} = -(C_v \ell_v - C_h \ell_h)/I_{gz}$

$$a_{22} = -(C_v \ell_v^2 + C_h \ell_h^2)/I_{gz} v$$

$$b_1 = C_v/m_g v$$
$$b_2 = C_v \ell_v/I_{gz}$$

Zum Entwurf des Regelgesetzes werden zwei vereinfachende Annahmen gemacht:

(1) Die Massenverteilung in Längsrichtung des Fahrzeugs ist äquivalent zu zwei konzentrierten Massen an Vorder- und Hinterachse, damit ergibt sich für das Fahrzeugträgheitsmoment

$$I_{gz} = m_g \ell_v \ell_h \qquad (5)$$

und die Lage des Schwerpunkts und damit der Abstände Schwerpunkt - Vorder- und Hinterachse $\ell_v$ und $\ell_h$. ändern sich nicht mit der Fahrzeugmasse $m_g$.

(2) Die Schräglaufsteifigkeiten haben einen gemeinsamen Faktor $\mu$ der den Kraftschluß mit der Straßenoberfläche beschreibt, d.h.

$$C_v = \mu c_v, C_h = \mu c_h \qquad (6)$$

wobei gilt: $\mu = 1{,}0$ für trockene Straße und $\mu = 0{,}5$ für nasse Straßen. Dieser Faktor kann zur "Normalisierung" der Masse benutzt werden, d.h. die normalisierte Masse läßt sich folgendermaßen definieren:

$$m = m_g/\mu \qquad (7)$$

Mit diesen Annahmen lauten dann die Koeffizienten des Zustandsmodells (4):

$$
\begin{aligned}
a_{11} &= -(c_v + c_h)/mv \\
a_{12} &= -1 - (c_v \ell_v - c_h \ell_h)/mv^2 \\
a_{21} &= -(c_v \ell_v - c_h \ell_h)/m\ell_v \ell_h \\
a_{22} &= -(c_v \ell_v^2 + c_h \ell_h^2)/mv\ell_v \ell_h \qquad (8) \\
b_1 &= c_v/mv \\
b_2 &= c_v/m\ell_h
\end{aligned}
$$

Das so manipulierte mathematische Modell beschreibt den Einfluß der unsicheren Betriebsparameter $\mu$ (Fahrzeugmasse/Kraftschluß-Koeffizient) und der Fahrgeschwindigkeit v auf die Dynamik des Einspurmodells für die Lenkung. Für eine extrem veränderte Massenverteilung in Längsrichtung des Fahrzeugs, beispielsweise bei Vollast im Kofferraum, und für extrem unterschiedliche Kraftschluß-Beiwerte an den Vorder- und Hinterrädern, wie beispielsweise beim Überfahren einer kleinen vereisten Stelle, ergeben sich Abweichungen von diesem Modell, welche jedoch bei der Herleitung des Regelgesetzes im Hinblick auf die gemachten Angaben hier nicht berücksichtigt sind.

Der Wirkungszusammenhang der Größen $\beta$, r und $\delta$ nach Gl.(4) ist durch einen mit "Fahrzeugmodell" bezeichneten, gestrichelt eingerahmten Block 10 in Fig.2 veranschaulicht.

Gemäß der Erfindung wird die Gierwinkelgeschwindigkeit r mit einem Kreisel 1 gemessen. Der zugehörige Sollwert $r_{soll}$ wird beispielsweise durch ein Potentiometer 2 vom Lenkradwinkel abgegriffen. Eine in einem Addierglied 3 gebildete Regelabweichung u = ($r_{soll}$ - r) steuert unmittelbar, d.h. mit der Verstärkung eins und ohne dynamische Kompensation, ein integrierendes Stellglied 4. In Fig.2 sind neben den in Gl.(4) angegebenen und definierten Koeffizienten, welche durch Blöcke $a_{11}$, $a_{12}$, $a_{21}$, $a_{22}$, $b_1$ und $b_2$ wiedergegeben sind, integrierende Elemente 5 und 6 sowie weitere Addierglieder 7 bis 9 dargestellt.

Das in Fig.2 dargestellte Stellglied 4 ist beispielsweise ein handelsüblicher hydraulischer oder elektrischer Stellmotor für den Lenkwinkel $\delta$, in welchem das Eingangssignal u integriert wird, so daß sich ergibt:

$$\dot{\delta} = u \qquad (9)$$

Eine alternative Ausführungsform ist die Verwendung einer konventionellen Servolenkung mit einer Posi-

EP 0 474 130 B1

tionsrückführung innerhalb des Stellglieds. Dies läßt sich durch die folgende Differentialgleichung

$$\dot{\delta} = -\frac{1}{T_a}\delta + \frac{1}{T_a}u^\bullet$$

(10)

bzw. die Übertragungsfunktion

$$\frac{\delta(s)}{u^\bullet(s)} = \frac{1}{1 + T_a s}$$

(10')

mit einer Zeitkonstanten $T_a$ beschreiben. Durch Verwendung eines PI-Reglers mit der Übertragungsfunktion

$$\frac{u*(s)}{u(s)} = \frac{1}{s} + T_a = \frac{1 + T_a s}{s}$$

(11)

wird wiederum ein integrierendes Verhalten erhalten. Zusammengefaßt mit Gl.(10') ergibt sich dann:

$$\frac{\delta(s)}{u(s)} = \frac{\delta(s)}{u^\bullet(s)} \cdot \frac{u^\bullet(s)}{u(s)} = \frac{1 + T_a s}{(1 + T_a s)s} = \frac{1}{s}$$

(12)

d.h. es wird das gleiche Verhalten wie beim Stellmotor (siehe Gl.9) ohne Rückführung erreicht.
Der Lenkwinkel $\delta$ wird als weitere Zustandsgröße in das Zustandsmodell (4) einbezogen:

$$\begin{bmatrix} \dot{\beta} \\ \dot{r} \\ \dot{\delta} \end{bmatrix} = \begin{bmatrix} a_{11} & a_{12} & b_1 \\ a_{21} & a_{22} & b_2 \\ 0 & 0 & 0 \end{bmatrix} \begin{bmatrix} \beta \\ r \\ \delta \end{bmatrix} + \begin{bmatrix} 0 \\ 0 \\ 1 \end{bmatrix} u$$

(13)

Zur Herleitung des Regelgesetzes wird zunächst anstelle des Schwimmwinkels $\beta$ eine andere Zustandsgröße eingeführt, nämlich die Querbeschleunigung $a_v$ an der Vorderachse. Nach Gl.(3) ist die Querkraft $F_c$ am Schwerpunkt SP:

$F_c = m_g \cdot v \cdot (\dot{\psi} + \dot{\beta})$,

und damit wird die Querbeschleunigung $a_{sp}$ am Schwerpunkt SP: $a_{sp} = v(\dot{\psi} + \dot{\beta})$. Mit dem Zustandsmodell (13) ist dann die Querbeschleunigung $a_{sp}$ am Schwerpunkt SP:

$a_{sp} = v(\dot{\psi} + \dot{\beta}) = v(r + a_{11}\beta + a_{12}r + b_1\delta)$     (14)

An der Vorderachse kommt noch der Einfluß der Gierbeschleunigung

$$\ddot{\psi} = \dot{r}$$

6

hinzu, so daß dann gilt:

$$a_v = a_{sp} + \ell_v \dot{r} \qquad (14')$$

und sich mit den Gl.'en (13) und (14) ergibt:

$$a_v = v(r + a_{11}\beta + a_{12}r + b_1\delta) + \ell_v(a_{21}\beta + a_{22}r + b_2\delta) \qquad (15)$$

Darin werden die Koeffizienten $a_{ij}$ und $b_i$ gemäß Gl.(8) eingesetzt, so daß sich ergibt:

$$
\begin{aligned}
a_v &= (va_{11} + \ell_v a_{21})\beta + (v + va_{12} + \ell_v a_{22})r + (vb_1 + \ell_v b_2)\delta \\
&= \left( -\frac{c_v + c_h}{m} - \frac{c_v \ell_v - c_h \ell_h}{m\ell_h} \right)\beta + \\
\end{aligned}
\qquad (16)
$$

$$
\begin{aligned}
&\left( -\frac{c_v \ell_v - c_h \ell_h}{mv} - \frac{c_v \ell_v^2 + c_h \ell_h^2}{mv\ell_h} \right)r + \left( \frac{c_v}{m} + \frac{c_v \ell_v}{m\ell_h} \right)\delta \\
&= c\left( -\beta - \frac{\ell_v}{v} \cdot r + \delta \right)
\end{aligned}
$$

mit

$$c = c_v(1 + \ell_v/\ell_h)/m = c_v \ell/\ell_h m \qquad (17)$$

Der Zusammenhang zwischen neuem und altem Zustandsvektor ist dann:

$$
\begin{bmatrix} a_v \\ r \\ \delta \end{bmatrix} = \begin{bmatrix} -c & -c\ell_v/v & c \\ 0 & 1 & 0 \\ 0 & 0 & 1 \end{bmatrix} \begin{bmatrix} \beta \\ r \\ \delta \end{bmatrix} \qquad (18)
$$

$$
\begin{bmatrix} \beta \\ r \\ \delta \end{bmatrix} = \begin{bmatrix} -1/c & -\ell_v/v & 1 \\ 0 & 1 & 0 \\ 0 & 0 & 1 \end{bmatrix} \begin{bmatrix} a_v \\ r \\ \delta \end{bmatrix} \qquad (19)
$$

und die Zustandsgleichung (13) erhält nach einigen Zwischenrechnungen die Form:

$$
\begin{bmatrix} \dot{a}_v \\ \dot{r} \\ \dot{\delta} \end{bmatrix} = \begin{bmatrix} d_{11} & d_{12} & d_{13} \\ d_{21} & d_{22} & d_{23} \\ 0 & 0 & 0 \end{bmatrix} \begin{bmatrix} a_v \\ r \\ \delta \end{bmatrix} + \begin{bmatrix} c \\ 0 \\ 1 \end{bmatrix} u \qquad (20)
$$

mit den Koeffizienten

$d_{11} = -c/v$

$d_{12} = c$

$d_{13} = 0$

$d_{21} = -(c_v \ell_v - c_h \ell_h)/m\ell_v \ell_h$

$d_{22} = -c_h(1 + \ell_h/\ell_v)/mv$

$d_{23} = c_h/m\ell_v$

Entscheidend für den Entwurf des Regelgesetzes ist die Tatsache, daß die Koeffizienten $d_{13} = 0$ und $d_{12} = c$ sind. Dies wird durch die folgende Schreibweise hervorgehoben:

$$\begin{bmatrix} \dot{a}_v \\ \dot{r} \\ \dot{\delta} \end{bmatrix} = \begin{bmatrix} d_{11} & c & 0 \\ d_{21} & d_{22} & d_{23} \\ 0 & 0 & 0 \end{bmatrix} \begin{bmatrix} a_v \\ r \\ \delta \end{bmatrix} + \begin{bmatrix} c \\ 0 \\ 1 \end{bmatrix} u \qquad (21)$$

Gemäß der Erfindung wird für alle Fahrzeuge und Betriebsbedingungen eine Rückführung

$u = r_{soll} - r \qquad (22)$

verwendet, wobei die Größe $r_{soll}$ der mit dem Lenkrad, beispielsweise über einen Potentiometerabgriff vorgegebene Sollwert für die Gierwinkelgeschwindigkeit r ist.

Ein Einsetzen des Regelgesetzes (22) in Gl. (21) ergibt dann:

$$\begin{bmatrix} \dot{a}_v \\ \dot{r} \\ \dot{\delta} \end{bmatrix} = \begin{bmatrix} d_{11} & 0 & 0 \\ d_{21} & d_{22} & d_{23} \\ 0 & -1 & 0 \end{bmatrix} \begin{bmatrix} a_v \\ r \\ \delta \end{bmatrix} + \begin{bmatrix} c \\ 0 \\ 1 \end{bmatrix} r_{soll} \qquad (23)$$

Dies wird als eine kanonische Form der Zustandsdarstellung für die Aufspaltung des Systems in ein beobachtbares und ein nichtbeobachtbares Teilsystem bezeichnet. Aus Gl. (23) ist zu ersehen, daß von der Ausgangsgröße

$$a_v = \begin{bmatrix} 1 & 0 & 0 \end{bmatrix} \begin{bmatrix} a_v \\ r \\ \delta \end{bmatrix} \qquad (24)$$

aus, das Teilsystem mit den Zuständen r und δ nicht beobachtbar ist. Damit geht auch dessen - von wechselnden Betriebsbedingungen abhängige Dynamik nicht in die Übertragungsfunktion vom Lenkrad zur Querbeschleunigung der Vorderachse ein. Diese Übertragungsfunktion ergibt sich aus dem steuerbaren und beobachtbaren Teilsystem

$$\dot{a}_v = d_{11} a_v + c r_{soll} \qquad (25)$$

zu

$$\frac{a_v(s)}{r_{soll}(s)} = \frac{c}{s - d_{11}} = \frac{c}{s + c/v} = \frac{v}{1 + Ts} \qquad (26)$$

mit der Zeitkonstanten

$T = v/c = vm\ell_h/c_v\ell$    (27)

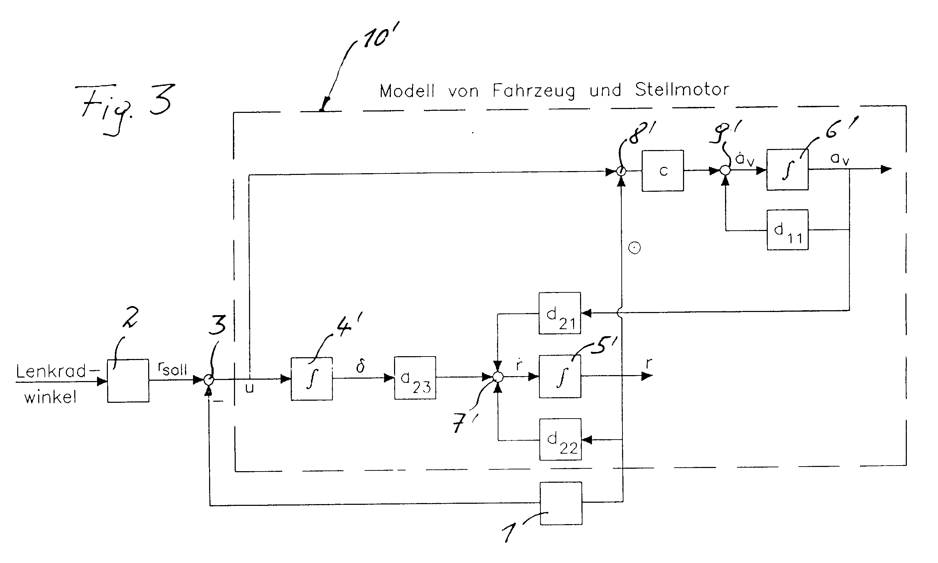

In dem Blockschaltbild in Fig.3 ist der Wirkungszusammenhang der Größen $a_v$, r, δ und u in Gl.(21) in einer besonders übersichtlichen Weise veranschaulicht. In Fig.3 sind neben den in Gl.(20) angegebenen und definierten Koeffizienten, welche durch Blöcke $d_{11}$, $d_{21}$, $d_{22}$, $d_{23}$ und c wiedergegeben sind, der Kreisel 1, das Potentiometer 2, integrierende Elemente 4' bis 6' sowie sowie Additionsglieder 3 und 7' bis 9' dargestellt.

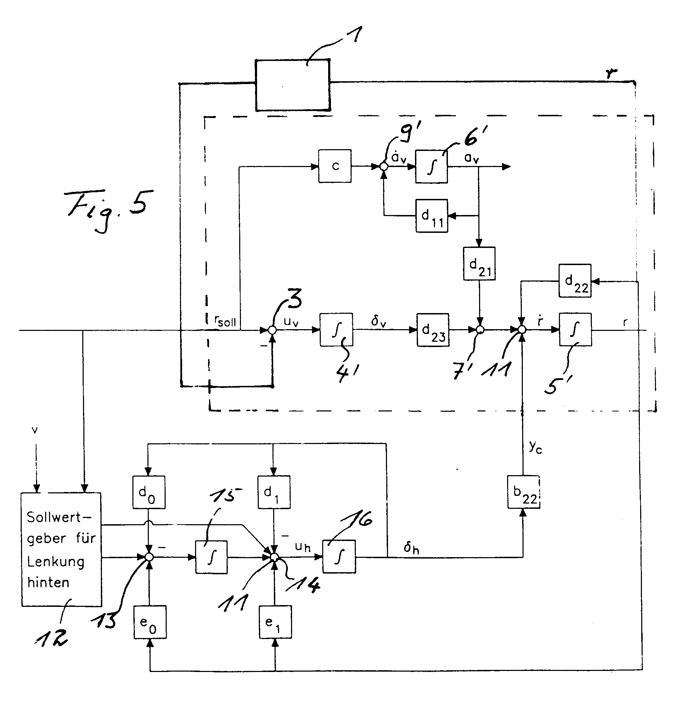

Die mit ⊙ in Fig.3 gekennzeichnete, innere Verbindung im Fahrzeugmodell 10'wird durch die Rückführung der mit dem Kreisel 1 gemessenen Gierwinkelgeschwindigkeit r in ihrer Wirkung aufgehoben. In Fig. 4 ist ein vereinfachtes Blockschaltbild wiedergegeben, aus welchem ersichtlich ist, daß nun keine Kopplung von der Gierwinkelgeschwindigkeit r zur Querbeschleunigung $a_v$ der Vorderachse mehr besteht. Da das Blockschaltbild der Fig.4 jedoch in seiner Wirkung genau dem System in Fig.3 entspricht, sind auch die entsprechenden Elemente mit denselben Bezugszeichen bezeichnet

Ein Lenkkommando $r_{soll}$ wirkt auf die beiden nur noch in einer Richtung gekoppelten Teilsysteme nach Fig.4, so daß deren Dynamik nunmehr einzeln untersucht werden kann. Es zeigt sich, daß sich einerseits verzögert eine Querbeschleunigung $a_v$ an der Vorderachse gemäß Gl. (26) aufbaut, während andererseits eine Regelabweichung $\dot{δ}$ = $r_{soll}$ - r entsteht, welche bei stabilem Regelkreis im stationären Zustand zu einem konstantem Lenkwinkel δ und damit zu $\dot{δ}$ = 0 führt, so daß hierdurch eine Abweichung vollständig ausgeregelt ist.

Die Stabilität des Kreises kann anhand seines charakteristischen Polynoms P(s) untersucht werden:

$$P(s) = det\begin{bmatrix} s - d_{22} & -d_{23} \\ 1 & s \end{bmatrix}$$

$$= s^2 - d_{22}s + d_{23}$$

$$= s^2 + (c_h(\ell_v + \ell_h)/mv\ell_v)s + c_h/m\ell_v$$

(28)

Bei Vorwärtsfahrt sind beide Koeffizienten $c_h(\ell_v + \ell_h)/mv\ell_v$ und $c_h/m_v$ stets positiv, und der Regelkreis ist somit stabil. Bei Rückwärtsfahrt ist die Fahrzeugbewegung mit und ohne eine Kreiselrückführung instabil und muß daher vom Fahrer stabilisiert werden.

Aus der Sicht des Fahrers ergibt sich dann bei konstanter Geschwindigkeit der folgende Unterschied zu einer konventionellen Lenkung. Bei der herkömmlichen Lenkung der Vorderräder entspricht ein fester Lenkwinkeleinschlag je nach der Beladung des Fahrzeugs und Straßenglätte einem kleineren oder größeren stationären Kreisbogen. Gemäß der Erfindung kommandiert der Fahrer eine Gierwinkelgeschwindigkeit, welche sich unabhängig von den Betriebsbedingungen einstellt und einem festen stationären Kreisbogen entspricht.

Gierbewegungen, welche nicht von einem Fahrerkommando, sondern beispielsweise durch Seitenwind oder aufgrund der Straßenbeschaffenheit ausgelöst sind, werden nunmehr automatisch ausgeregelt; dies führt somit zu einer erhöhten Sicherheit, wenn beispielsweise das Fahrzeug aus einem Wald heraus in starken Seitenwind hineinfährt.

Die Gierwinkelgeschwindigkeit kann beispielsweise mit Hilfe eines handelsüblichen Kreisels gemessen werden. Da nur eine Rückführung ohne einen weiteren Regelalgorithmus verwirklicht sein muß, kann der Kreisel beispielsweise auch mechanisch oder fluidisch in den Stellmotor für die Lenkung integriert werden. Die Soll-Gierwinkelgeschwindigkeit kann gegebenenfalls auch aus den Messungen zweier Beschleunigungsmesser rekonstruiert werden.

Bei einem Fahrzeug mit zusätzlicher Hinterradlenkung kann die Dynamik der Gierbewegung nach Wunsch verändert werden. Zunächst wird Gl. (28), welche in dieser Form nur für eine Vorderradlenkung gilt, mit Hilfe einer Dämpfungsgröße D und einer natürlichen Frequenz $\omega_n$ umgeschrieben, d.h. mit dem Ausdruck

$$P(s) = s^2 + 2D\omega_n s + \omega_n^2$$

(29)

verglichen. Es ergibt sich dann:

$$\omega_n = \sqrt{c_h/m\ell_v} \quad (30)$$

$$D = \frac{\ell}{2v}\sqrt{\frac{c_h}{m\ell_v}} \qquad (31)$$

Konstruktiv kann die Dämpfung D durch einen langen Radstand $\ell_h + \ell_v$, eine geringe Fahrzeugmasse m, einen weit vorne liegenden Schwerpunkt SP, d.h. einen kleinen Abstand Schwerpunkt Vorderachse $\ell_v$ sowie durch eine große hintere Schräglaufsteifigkeit $c_h$ erhöht werden. Damit wird dann auch die natürliche Frequen $\omega_n$ so groß wie möglich gemacht.

Bei der Realisierung dieser Auslegungsüberlegungen können sich jedoch Konflikte ergeben, so daß zur Dämpfungserhöhung alternative Wege von Interesse sind. Da die Art der Gierbewegung von verschiedenen Fahrern unterschiedlich empfunden bzw. gewünscht wird, ist es durchaus interessant, wenn zwischen einer "sportlichen" und "komfortablen" Fahrweise umschaltbar ist. Diese Möglichkeiten sind bei Fahrzeugen mit einer zusätzlichen Hinterradlenkung durch das erfindungsgemäße Lenkverfahren gegeben.

In Gl. (1) für die Seitenbewegung muß unter Berücksichtigung von Gl. (6) der Lenkungsterm $-C_v\delta$ ersetzt werden durch den Ausdruck $(-c_v \cdot \delta_v - c_h \cdot \delta_h)$, und in Gl. (2) für die Gierbewegung wird der Lenkungsterm $-C_v \ell_v \delta$ ersetzt durch den Ausdruck $(-c_v \ell_v \delta_v + c_h \ell_h \delta_h)$, wobei $\delta_v$ und $\delta_h$ der vordere bzw. der hintere Lenkwinkel sind. Damit wird aus der Zustandsdarstellung (4):

$$\begin{bmatrix} \dot{\beta} \\ \dot{r} \end{bmatrix} = \begin{bmatrix} a_{11} & a_{12} \\ a_{21} & a_{22} \end{bmatrix} \begin{bmatrix} \beta \\ r \end{bmatrix} + \begin{bmatrix} b_{11} & b_{12} \\ b_{21} & b_{22} \end{bmatrix} \begin{bmatrix} \delta_v \\ \delta_h \end{bmatrix} \qquad (32)$$

mit unveränderten $a_{ij}$, $b_{11} = b_1$, $b_{21} = b_2$ und

$$b_{12} = C_h/m_g v = c_h/mv$$
$$b_{22} = -C_h \ell_h/I_{gz} = -c_h/m\ell_v \qquad (33)$$

Anstelle von Gl. (9) sind nun zwei integrierende Stellmotoren vorhanden, so daß gilt:

$$\dot{\delta}_v = u_v$$
$$\dot{\delta}_h = u_h \qquad (34)$$

Aus der Zustandsgleichung bzw. dem Modell (13) wird dann:

$$\begin{bmatrix} \dot{\beta} \\ \dot{r} \\ \dot{\delta}_v \\ \dot{\delta}_h \end{bmatrix} = \begin{bmatrix} a_{11} & a_{12} & b_{11} & b_{12} \\ a_{21} & a_{22} & b_{21} & b_{22} \\ 0 & 0 & 0 & 0 \\ 0 & 0 & 0 & 0 \end{bmatrix} \begin{bmatrix} \beta \\ r \\ \delta_v \\ \delta_h \end{bmatrix} + \begin{bmatrix} 0 & 0 \\ 0 & 0 \\ 1 & 0 \\ 0 & 1 \end{bmatrix} \begin{bmatrix} u_v \\ u_h \end{bmatrix} \qquad (35)$$

Die Gl.'en (14) und (15) erweitern sich dann zu

$$a_{sp} = v(r + a_{11}\beta + a_{12}r + b_{11}\delta_v + b_{12}\delta_h) \qquad (36)$$

$$a_v = v(r + a_{11}\beta + a_{12}r + b_{11}\delta_v + b_{12}\delta_h) + \ell_v(a_{21}\beta + a_{22}r + b_{21}\delta_v + b_{22}\delta_h) \qquad (37)$$

Es gilt jedoch:

$$vb_{12} + \ell_v b_{22} = 0 \qquad (38)$$

so daß Gl. (16) mit $\delta = \delta_v$ unverändert gilt und damit auch die Gl.'en (18) und (19). Aus Gl. (21) wird jedoch:

$$\begin{bmatrix} \dot{a}_v \\ \dot{r} \\ \dot{\delta}_v \\ \dot{\delta}_h \end{bmatrix} = \begin{bmatrix} d_{11} & c & 0 & 0 \\ d_{21} & d_{22} & d_{23} & b_{22} \\ 0 & 0 & 0 & 0 \\ 0 & 0 & 0 & 0 \end{bmatrix} \begin{bmatrix} a_v \\ r \\ \delta_v \\ \delta_h \end{bmatrix} + \begin{bmatrix} c & 0 \\ 0 & 0 \\ 1 & 0 \\ 0 & 1 \end{bmatrix} \begin{bmatrix} u_v \\ u_h \end{bmatrix} \qquad (39)$$

Die Rückführung von r nach $u_v$ gemäß Gl. (22) bewirkt dann:

$$\begin{bmatrix} \dot{a}_v \\ \dot{r} \\ \dot{\delta}_v \\ \dot{\delta}_h \end{bmatrix} = \begin{bmatrix} d_{11} & 0 & 0 & 0 \\ d_{21} & d_{22} & d_{23} & b_{22} \\ 0 & -1 & 0 & 0 \\ 0 & 0 & 0 & 0 \end{bmatrix} \begin{bmatrix} a_v \\ r \\ \delta_v \\ \delta_h \end{bmatrix} + \begin{bmatrix} c & 0 \\ 0 & 0 \\ 1 & 0 \\ 0 & 1 \end{bmatrix} \begin{bmatrix} r_{soll} \\ u_h \end{bmatrix} \qquad (40)$$

Das Teilsystem mit den Zustandsgrößen r, $\delta_v$ und $\delta_h$ ist dann nicht von $a_v$ aus beobachtbar. Eine Rückführung von $a_v$ hätte also keinen Einfluß auf seine Dynamik. Das Teilsystem ist (aufgrund des Wertes -1 von der Kreiselrückführung) von $u_h$ aus steuerbar; somit können seine Eigenwerte durch eine Zustandsvektor-Rückführung beliebig festgelegt werden. Die Zustände r(welche durch Kreisel erhalten werden) und die Größen $\delta_v$ und $\delta_h$, die von vorderen und hinteren Lenkwinkel-Sensoren erhalten werden, sind meßbar,so daß die Zustandsvektor-Rückführung realisierbar ist.

Zur Ausführung der Polvorgabe wird jetzt das Teilsystem:

$$\dot{x} = Ax + b u_h, \quad x = \begin{bmatrix} r & \delta_v & \delta_h \end{bmatrix}^T \qquad (41)$$

mit

$$A = \begin{bmatrix} d_{22} & d_{23} & b_{22} \\ -1 & 0 & 0 \\ 0 & 0 & 0 \end{bmatrix}, b = \begin{bmatrix} 0 \\ 0 \\ 1 \end{bmatrix}$$

untersucht.
Durch eine Zustandsvektor-Rückführung

$u_h = -k^T x$ (42)

erhält das System das charakteristische Polynom P(s):

$P(s) = det(sI-A + bk^T) = a_0 + a_1 s + a_2 s^2 + s^3$ (43)

Umgekehrt kann für ein vorgegebenes, charakteristisches Polynom P(s) aus Gl.(43) die dazu benötigte Zustandsvektor-Rückführung erhalten werden zu

$k^T = e^T P(A)$ (44)

mit

$e^T = [e_1 \ e_2 \ e_3] = [0\ 0\ 1][b,Ab,A^2b]^{-1}$

oder

$$[e_1 \ e_2 \ e_3][b,Ab,A^2b] = [0 \ 0 \ 1]$$

$$[e_1 \quad e_2 \quad e_3] \begin{bmatrix} 0 & b_{22} & d_{22}b_{22} \\ 0 & 0 & -b_{22} \\ 1 & 0 & 0 \end{bmatrix} = [0 \quad 0 \quad 1]$$

$$e^T = [0 \ -1/b_{22} \ 0]$$
$$k^T = [a_0 \ a_1 \ a_2 \ 1]E \qquad (45)$$

mit der Polvorgabematrix

$$\mathbf{E} = \begin{bmatrix} \mathbf{e}^T \\ \mathbf{e}^T\mathbf{A} \\ \mathbf{e}^T\mathbf{A}^2 \\ \mathbf{e}^T\mathbf{A}^3 \end{bmatrix} = \begin{bmatrix} 0 & -1/b_{22} & 0 \\ 1/b_{22} & 0 & 0 \\ d_{22}/b_{22} & d_{23}/b_{22} & 1 \\ (d_{22}^2 - d_{23})/b_{22} & d_{22}d_{23}/b_{22} & d_{22} \end{bmatrix}$$
$$= \begin{bmatrix} 0 & m\ell_v/c_h & 0 \\ -m\ell_v/c_h & 0 & 0 \\ \ell/v & -1 & 1 \\ 1 - c_h\ell^2/mv^2\ell_v & c_h\ell/mv\ell_v & -c_h\ell/mv\ell_v \end{bmatrix} \qquad (46)$$

In Fahrversuchen muß dann herausgefunden werden, welche Lage der Eigenwerte der Gierbewegung von Fahrern als angenehm empfunden wird.

Gemäß der Erfindung braucht der vordere Lenkwinkel nicht gemessen zu werden. Vielmehr wird ein elektronischer Integrator in der Hinterradlenkung verwendet. Zusammen mit einem Stellmotor, d.h. einem mechanischen Integrator kann damit ein Kompensator zweiter Ordnung aufgebaut werden, wie er in einem Blockschaltbild der Fig.5 dargestellt ist. Hierbei entspricht der obere Teil der Fig.5 der vereinfachten Form des in Fig.4 dargestellten Blockschaltbildes, welchem lediglich ein zusätzliches Addierglied 11 hinzugefügt worden ist. Im unteren Teil der Fig.5 sind neben einem Sollwertgeber 12 für die hintere Lenkung noch zusätzliche Addierglieder 13 und 14 sowie ein weiterer Integrator 15 und ein integrierender Stellmotor 16 neben den Koeffizientenblöcken $d_0$, $d_1$, $e_0$, $e_1$ sowie $b_{22}$ vorgesehen.

Die Übertragungsfunktion des Kompensators für den bei der Verbindung $y_c$ geöffneten Regelkreis ist:

$$\frac{y_c(s)}{r(s)} = b_{22}\frac{e_0 + e_1s}{d_0 + d_1s + s^2} \qquad (48)$$

Zusätzliche Eingangsgrößen des Kompensators können von einem Sollwertgeber aus den Größen $r_{soll}$ und v generiert werden, Die Steuerung insgesamt hat keinen Einfluß auf die Eigenwerte der Gierbewegung. Diese Eigenwerte ergeben sich vielmehr aus der Zusammenschaltung des Kompensators entsprechend der Übertragungsfunktion (48) mit dem Teilsystem mit dem Eingangswert $y_c$ und dem Ausgangswert r. Sein Zustandsmodell ergibt sich aus Gl. (40) wie folgt:

$$\begin{bmatrix} \dot{r} \\ \dot{\delta}_v \end{bmatrix} = \begin{bmatrix} d_{22} & d_{23} \\ -1 & 0 \end{bmatrix} \begin{bmatrix} r \\ d_v \end{bmatrix} + \begin{bmatrix} 1 \\ 0 \end{bmatrix} y_c + \begin{bmatrix} d_{21} \\ 0 \end{bmatrix} a_v + \begin{bmatrix} 0 \\ 1 \end{bmatrix} r_{soll} \qquad (49)$$

Für die Polvorgabe der Gierbewegung wird nur der Eingang $y = b_{22}\delta_h$ benutzt und die entsprechende Übertragungsfunktion ist dann:

$$\frac{r(s)}{y_c(s)} = \frac{s}{s^2 - d_{22}s + d_{23}} \qquad (50)$$

Aus der Schließungsbedingung des Kreises über den Kompensator folgt das charakteristische Polynom der Gierbewegung:

$$\begin{aligned} P(s) \;=\; & (d_0 + d_1 s + s^2)(s^2 - d_{22}s + d_{23}) - b_{22}(e_0 + e_1 s)s \\ =\; & d_0 d_{23} + (d_1 d_{23} - d_0 d_{22} - e_0 b_{22})s \\ & + (d_{23} - d_1 d_{22} + d_0 - e_1 b_{22})s^2 + (d_1 - d_{22})s^3 + s^4 \end{aligned}$$
$$(51)$$

Der Koeffizientenvergleich mit einem Vorgabepolynom

$$P(s) = a_0 + a_1 s + a_2 s^2 + a_3 s^3 + s^4 \qquad (52)$$

ergibt das Gleichungssystem

$$
\begin{aligned}
a_0 &= d_0 d_{23} \\
a_1 &= d_1 d_{23} - d_0 d_{22} - e_0 b_{22} \\
a_2 &= d_{23} - d_1 d_{22} + d_0 - e_1 b_{22} \\
a_3 &= d_1 - d_{22} \qquad (53)
\end{aligned}
$$

Darin sind die Koeffizienten $d_{22}$, $d_{23}$ und $b_{22}$ gegeben und die Kompensatorkoeffizienten $d_0$, $d_1$, $e_0$ und $e_1$ ergeben sich zu:

$$
\begin{aligned}
d_0 &= a_0/d_{23} \\
d_1 &= a_3 + d_{22} \\
e_0 &= (d_1 d_{23} - d_0 d_{22} - a_1)/b_{22} \\
e_1 &= (d_{23} - d_1 d_{22} + d_0 - a_2)/b_{22} \qquad (54)
\end{aligned}
$$

Für das geregelte System "Gierdynamik" können die gewünschten Eigenwerte vorgegeben werden, so daß dadurch dann auch das charakteristische Polynom (52) vorgegeben ist und die Kompensatorkoeffizienten $d_0$, $d_1$ $e_0$ und $e_1$ nach (54) die erforderliche Kompensator-Einstellung liefern.

Nachdem bei Anwendung des erfindungsgemäßen Verfahrens die Stabilität eines Fahrzeugs zuverlässig gewährleistet ist, lassen sich noch weitere Forderungen bezüglich der Lenkung der Hinterräder ohne Kompromisse und damit auch ohne Auswirkungen auf die Stabilität verwirklichen. Der in dem Blockschaltbild der Fig.5 wiedergegebene Kompensator bietet zwei Eingriffsmöglichkeiten für einen Sollwertgeber, welcher beispielsweise die vom Fahrer vorgegebene Soll-Gierwinkelgeschwindigkeit $r_{soll}$ sowie die Fahrgeschwindigkeit $v$ verarbeitet. Eine solche typische Forderung würde sein, daß Gierwinkelgeschwindigkeit und Querbeschleunigung am Fahrersitz als die beiden vom Fahrer tatsächlich wahrgenommenen Bewegungsgrößen die gleiche Phasenverzögerung haben. Ebenso ließe sich die Ausrichtung der Fahrzeug-Längsachse relativ zur Kurventangente damit beeinflussen.

## EP 0 474 130 B1

**Patentansprüche**

1. durch eine integrierende Rückführung eines gemessenen Giergeschwindigkeitssignals auf die Vorderradlenkung die Gierbewegung von der Seitenbewegung der Vorderachse entkoppelt wird, und

2. die Eigenwerte der Gierbewegung durch Rückführung des gemessenen Giergeschwindigkeitssignals auf die Hinterradlenkung nach Wunsch so verschoben werden, daß die Wahl der Giereigenwerte keinen Einfluß auf die Lenkübertragungsfunktion vom Lenkrad zur Seitenbewegung der Vorderachse hat.

**Claims**

1. by an integrating feedback of a measured yaw rate signal to the front-wheel steering the yaw motion is decoupled from the lateral motion of the front axle, and

2. the eigenvalues of the yaw motion can be shifted as desired by feedback of the measured yaw rate signal to the rear-wheel steering in such a manner that the choice of the yaw eigenvalues has no influence on the steering transfer function from the steering wheel to the lateral motion of the front axle.

**Revendications**

1. le mouvement de lacet est désaccouplé du mouvement latéral de l'essieu avant par une rétroaction intégratrice d'un signal de vitesse de lacet mesuré sur les roues avant dirigeables, et

2. les valeurs propres du mouvement de lacet sont déplacées de la valeur désirée par rétroaction du signal de vitesse de lacet mesuré sur les roues arrière dirigeables, de manière que le choix des valeurs propres de lacet n'aient aucune influence sur la fonction de transmission de direction entre le volant de direction et le mouvement latéral de l'essieu avant.

Fig. 1

Fig. 4

Fig. 2

Fahrzeugmodell

10

Lenkrad-winkel

$r_{soll}$

u

$\delta$

$b_2$

$\dot{r}$

$\int$

r

$b_1$

8

9

$\dot{\beta}$

$\int$

$\beta$

6

$a_{12}$

$a_{11}$

$a_{21}$

5

$a_{22}$

7

2

3

4

1

EP 0 474 130 B1

EP 0 474 130 B1

Fig. 3

Modell von Fahrzeug und Stellmotor

10'

Lenkrad-winkel

$r_{soll}$

u

$\delta$

$d_{23}$

$\dot{r}$

r

$d_{21}$

$d_{22}$

c

$\dot{a}_v$

$a_v$

$d_{11}$

2

3

4'

5'

6'

7'

8'

9'

1

Fig. 5